# EUROPEAN PATENT SPECIFICATION

(11) **EP 0 585 193 B1**
(45) Date of publication and mention of the grant of the patent: **11.06.1997**
(21) Application number: 93500101.6
(22) Date of filing: 09.07.1993
(51) Int. Cl.: C01B 31/02, C10C 3/00

(54) **Method for the industrial manufacture of carbon-containing mesophase microspheres and derived carbon objects**
Verfahren zur industriellen Herstellung von Kohlenstoff-Mesophase enthaltenden Mikrokugeln und daraus hergestellte Kohlenstoffkörper
Procédé pour la manufacture industrielle de microsphères de carbone contenant de la mesophase et object dérivés en carbone

(30) Priority: 10.07.1992 ES 9201435
(43) Date of publication of application: 02.03.1994
(73) Proprietor: REPSOL PETROLEO S.A., E-28046 Madrid (ES)
(72) Inventor: Gomez de Salazar Fernandez, Carlos, E-28045 Madrid (ES); Romero Palazon, Eduardo, E-28045 Madrid (ES); Rodriguez Reinoso, Francisco, E-28045 Madrid (ES); Santamaria Ramirez, Ricardo, E-28045 Madrid (ES)
(74) Representative: Garcia Cabrerizo, Francisco

(56) References cited:
- GB-A- 2 067 538
- GB-A- 2 086 932
- DATABASE WPI Week 8605, Derwent Publications Ltd., London, GB; AN 86-033222 & JP-A-60255604

## Description

Mesophase microspheres containing carbon, referred to below as MMC, are formed by heating a feedstock consisting essentially of heavy hydrocarbons originating from petroleum residues or coal tar, followed by extraction with an aromatic solvent.

When various petroleum or coal tar residues are heated in an inert atmosphere a reduction in viscosity occurs, as a result of the temperature, and cracking of the molecules initially present in the feedstock. This reduction in viscosity is responsible for the establishment of a dynamic system in which particular molecules interact physically and chemically. Initially the molecules undergo extensive chemical changes, forming large polycondensed aromatic molecules. Because of their planar shape these can group together, as a result of Van der Waals forces, forming a new phase (the mesophase or intermediate phase). In order to have the lowest possible surface tension, this new phase adopts a spherical shape.

In these microspheres the molecules (polycyclic aromatic hydrocarbons) are ordered to a high degree, in a planar fashion in a specific direction, and as a result they are optically anisotropic. Because of their ordered pseudocrystaline structure these MMC have electrical and magnetic activity, and they therefore have great interest for applications in fields which can use these properties.

The intermediate phase or mesophase, of which the MMC mentioned consist, also have crystalline ordering and can be called "liquid crystals", with specific physical properties in a preferential direction, which makes them anisotropic.

If this intermediate phase is further heated the spheres continue to grow and coalesce together, until all the material is converted into an anisotropic material. If the temperature or the residence time is then further increased, the mass solidifies totally and is converted into coke.

An aromatic solvent such as pyridine, quinoline, anthracene oil, creosote oil, etc., is used to separate these microspheres from the rest without reaction or coalescence. Other methods of separation such as filtering and centrifuging have proved to be of little use for separating the microspheres, because the filters become clogged, and because the microspheres themselves are broken down, and because of the difficulty in scaling up centrifuging to an industrial scale.

The fundamental problem in the extraction process using aromatics is due to the small amount of microspheres obtained in the material carbonised using the above processes, and the high solute/solvent ratio required in order to achieve effective extraction, the quantity of solvent required being enormous, and the process on an industrial scale being extremely expensive and of low yield.

### SUMMARY OF THE INVENTION

The object of this invention is to provide a process for producing MMC by increasing the yield of microspheres formed during the carbonisation stage.

As a result of his research the applicant has discovered a method of increasing the yield of MMC by means of the process according to the invention.

In accordance with the invention the method for obtaining MMC, briefly summarised, consists of:
a) treating a starting material, specifically a petroleum residue or coal tar, in a reactor with or without agitation with heat at high pressure.
b) heat treatment of the material obtained in the previous stage in the same or another reactor at low pressure.
c) extraction of the mixture obtained in stage b), with agitation, using an aromatic solvent.
d) filtering, washing and drying the product obtained in stage c).
e) shaping, pressing, calcination and graphitisation of the product resulting from stage d).

### DETAILED DESCRIPTION

The starting material for the production of optically anisotropic microspheres includes industrial petroleum residues, such as e.g. residues from the atmospheric distillation of petroleum, petroleum residues obtained under reduced pressure, heavy petroleum oils from thermal or catalytic cracking, and coal tars. This material is subjected to heat treatment at a temperature of between 350 and 500^{º}C, and preferably between 400 and 450^{º}C. The treatment time depends on the feedstock used and the temperature of thermal treatment, although it generally lies between 0.5 and 5 hours. When the feedstock is more reactive or the temperature is higher the spheres formed tend to coalesce and form coke, and it is then impossible to produce the said spheres in an isolated form. On the other hand if the temperature or reactivity are not sufficiently high, the diameter and yield of the microspheres is vey low. This first heat treatment is carried out in an inert atmosphere at a pressure of between 2 and 40 kg/cm², and preferably between 5 and 30 kg/cm² depending on the feedstock and/or temperature used.

After this first heat treatment (with or without prior cooling) the product is subjected to a second heat treatment at the same temperature as previously or at a temperature up to 20^{º}C above or below the temperature in the first heat treatment for a time of between 0.1 and 3 hours, and at an appreciably lower pressure than in the first treatment, of between 0.1 and 10 kg/cm², and preferably between 0.3 and 3 kg/cm².

During this second stage there is an increase in distillates from the reactor, which increases the viscosity of the medium, preventing the microspheres from approaching each other, growing and increasing in diameter, and increasing their yield, without contact or coalescence with each other.

In order to separate the microspheres from the tar in which they are contained an extraction stage using solvents is necessary.

The solvent used is an aromatic solvent, such as pyridine, quinoline, creosote oil or anthracene oil, or heavy oils from the thermal or catalytic cracking of petroleum products. This extraction takes place with agitation at a temperature of between 100 and 250^{º}C. As a result of the high extraction power of the solvent, the anisotropic MMC, which are insoluble, separate out from the remainder of the carbonised material which has not been able to form crystalline structures, as a result of which it is isotropic and soluble in the aromatic solvent used.

All the material is transferred into another vessel, in which the upper phase which contains the solvent with most of the isotropic material is separated off by settling, leaving the MMC, which can then be filtered, washed and dried in a large concentration at the bottom.

The MMC obtained in this way have a pre-graphitic crystalline structure, and represent a very useful material for a number of industrial applications. As a result of the isotropic material which they contain, and which is not wholly removed during the extraction phase, they have self-adhesive properties which means that they can be used as an agglomerate, as a substitute for tar, for the manufacture of high performance electrodes, with or without the admixture of petroleum coke, appreciably improving their thermal expansion and conductivity properties.

Also these MMC may be subjected (with or without previous shaping under pressure) to calcination processes, including subsequent graphitisation for the manufacture of casting moulds and other special carbon materials including the preparation of high density isotropic graphite. As no external agglomerating agent is required for the moulding process, losses in the coking and graphitisation processes can be reduced to a minimum and a high density carbonaceous material can be produced.

As a result of their electrical properties they can also be used as a filler material for the manufacture of electrically conducting plastics.

### EXAMPLES

### Example n^{º} 1

A decanted oil obtained by the fluid be catalytic cracking of a light petroleum residue was subjected to heat treatment at 430^{º}C for two hours in an inert atmosphere and at a pressure of 25 kg/cm². The pressure was subsequently reduced to 4 kg/cm² and held for a further one hour. The resulting product was 28.3% by weight of the total settled oil, with a quinoline-insoluble material content of 57.8%. This product was transferred into another vessel in which an aromatic solvent, anthracene oil, was added in the ratio 1:10, and extracted for 2 hours at 110^{º}C. The yield of MMC from this extraction was 61.8%.

The mesophase microspheres obtained were observed under a polarised light microscope and a size range of between 1 and 100 microns was found, with a maximum between 25 and 50 µm. Samples were prepared using this product by pressing at 1000 kg/cm² and calcination at 1000^{º}C, and a bending strength test was performed, yielding a value of 380 kg/cm².

### Example n^{º} 2

The same settled oil as in example 1 was subjected to heat treatment at 450^{º}C for 1 hour in an inert atmosphere at a pressure of 25 kg/cm². The pressure was then reduced to 3 kg/cm² and held for a further 1 hour. The yield of product was 30.4% in relation to the original settled oil, with a quinoline-insolubles content of 62.3%.

Observation of the product after it had been extracted with quinoline showed a large number of anisotropic mesophase spheres, but it was found that approximately 15% of the total had coalesced, which indicates that coke had formed through the combination of mesophase microspheres.

Bend tests performed on test pieces prepared from this material yielded values of 210 kg/cm².

### Example n^{º} 3

The same settled oil as in examples 1 and 2 was subjected to heat treatment at 430^{º}C for 3 hours in an inert atmosphere and at a pressure of 25 kg/cm². The product yield was 31.6% in relation to the settled oil. The quinoline-insolubles content of the carbonised product was 31.2%.

When the product had been extracted with anthracene oil it was observed with an optical microscope using polarised light. A large quantity of coalesced coke and a small quantity of mesophase microspheres were found. The volatiles content of the products was 15.1%.

When the test pieces were calcined at 1000^{º}C after the material had been pressed with an axial pressure of 1000 kg/cm², swelling took place and this prevented further tests from being performed. This swelling was due to the large quantity of volatiles present in the original sample, and caused break-up of the test piece during calcination, even though this was performed at a very slow rate, 1^{º}C/min.

## Claims

1. A method for the industrial production of carbon-containing mesophase microspheres which have optical anisotropy, characterised in that a petroleum residue or a coal tar is subjected to heat treatment between 350 and 500^{º}C in two stages: the first at a pressure of between 2 and 40 kg/cm², for a time of between 0.5 and 5 hours, and the second under a pressure of between 0.1 and 10 kg/cm² for a time of between 0.1 and 3 hours.

2. A method according to claim 1, characterised in that the product resulting from the two stage carbonisation is subjected to an extraction process using organic solvents of the type of quinoline, pyridine, anthracene oil or aromatic oils originating from cracking in the process for the manufacture of ethylene, to obtain carbon-containing mesophase microspheres (MMC), the said extraction being performed between 100 and 200^{º}C, with a solute/solvent ratio of between 1:10 and 1:40.

3. A method according to claim 2, characterised in that the resulting product, which predominantly consists of carbon-containing mesophase microspheres, is appropriately shaped under high pressure after a process of filtering, washing and drying, and calcined at temperatures below 1400^{º}C to produce pieces of carbon with special properties.

4. A method according to claim 2, characterised in that the resulting product, carbon-containing mesophase microspheres having an anisotropic structure, is heated after pressing and slow coking to 1500^{º}C to a temperature above 1500^{º}C and up to 3000^{º}C in order to produce pieces of high density isotropic graphite.

## Patentansprüche

1. Methode zur industriellen Herstellung von mesophasischen, kohlehaltigen Mikrosphären, mit optischer Anisotropie, dadurch gekennzeichnet, dass ein Petroleumrückstand oder Kohleteer einer zweistufigen Wärmebehandlung bei Temperaturen von 350 bis 500°C unterzogen wird: in der ersten Stufe bei einem Druck von 2 bis 40 kg/cm², über einen Zeitraum von 0,5 bis 5 Stunden und in der zweiten Stufe bei einem Druck von 0,1 bis 10 kg/cm², über einen Zeitraum von 0,1 bis 3 Stunden.

2. Methode nach Anspruch 1, dadurch gekennzeichnet, dass das aus der zweistufigen Verkohlung stammende Produkt einem Extraktionsverfahren unterzogen wird, bei dem organische Lösungsmittel wie Chinolin, Pyridin, Anthrazenöl oder aromatische Öle verwendet werden, die aus dem Kracken im Verfahren zur Herstellung von Ethylen entstehen, um mesofasische, kohlehaltige Mikrosphären (MMC) zu erhalten, wobei die genannte Extraktion bei Temperaturen von 100 bis 200°C und in einem Verhältnis von Gelöstem/Lösungsmittel von 1:10 bis 1:40 durchgeführt wird.

3. Methode nach Anspruch 2, dadurch gekennzeichnet, dass das erhaltene Produkt, dass vorwiegend aus mesophasischen, kohlehaltigen Mikrosphären besteht, in geeigner Weise unter Hochdruck, nach einem Verfahren zur Filtration, Waschung und Trocknung, verformt wird, und bei Temperaturen unter 1.400°C kalziniert wird, um Kohleteile mit besonderen Eigenschaften herzustellen.

4. Methode nach Anspruch 2, dadurch gekennzeichnet, dass das erhaltene Produkt, die mesophasichen, kohlehaltigen Mikrosphären mit anisotropischer Struktur, nach der Druckbehandlung und der langsamen Verkokung bei 1.500°C auf Temperaturen über 1.500°C und bis zu 3.000°C erhitzt wird, zur Herstellung von anisotropischen Graphitteilen hoher Dichte.

## Revendications

1. Méthode pour la production industrielle de microsphéres mésophasiques contenant du charbon, à anisotropie optique,caractérisée en ce qu'un résidu de pétrole ou un goudrun de charbon est soumis à un traitement de chaleur entre 350 et 500°C comportant deux étapes: la premiére, sous une pression d'entre 2 et 40 Kg/cm², pendant une période de 0,5 à 5 heures, et la deuxième sous une pression d'entre 0,1 et 10 Kg/cm², pendant une période de 0,1 et 3 heures.

2. Méthode selon la revendication 1, caractérisée en ce que le produit résultant de la carbonisation des deux étapes est soumis à un processus d'extraction en utilisant des solvents organiques du genre de la quinoline, la pyridine, l'huile d'anthracène ou les huiles aromatiques, dont l'origine est le cracking de la méthode de fabrication de l'éthylène, afin d'obtenir des microsphères mésophasiques contenant du charbon (MMC), ladite extraction étant réalisée à une température d'entre 100 et 200°C, selon une proportion du dissous/solvant d'entre 1:10 et 1:40.

3. Méthode selon la revindication 2, caractérisée en ce que le produit résultant, étant composé d'une façon prédominante de microsphéres mésophasiques contenant du charbon, est mis en moulage de façon appropriée sous haute pression aprés procédure de filtrage, lavage et séchage et il est calciné à des températures inférieures à 1.400°C afin d'obtenir des piéces de charbon à propriétes spéciales.

4. Méthode selon la revindication 2, caractérisée en ce le produit résultant, des microsphères mésophasiques contenant du charbon, à structure anisotropique, est chaufeé aprés pression et lente cokéfaction à 1.500°C jusqu'une température supérieure à 1.500°C et jusqu'à 3.000°C, afin d'obtenir des pièces de graphite anisotropique à haute densité.
